# EUROPÄISCHE PATENTSCHRIFT

(11) **EP 1 629 226 B1**
(45) Veröffentlichungstag und Bekanntmachung des Hinweises auf die Patenterteilung: **21.02.2007**
(21) Anmeldenummer: 04765653.3
(22) Anmeldetag: 22.09.2004
(51) Int. Cl.: F16K 15/06

(54) **RÜCKFLUSSVERHINDERER**
BACKFLOW PREVENTER
SYSTEME ANTI-REFLUX

(30) Priorität: 03.11.2003 DE 20316977 U
(43) Veröffentlichungstag der Anmeldung: 01.03.2006
(73) Patentinhaber: Neoperl GmbH, 79379 Müllheim (DE)
(72) Erfinder: FANGMEIER, Martin, 79424 Auggen (DE)
(74) Vertreter: Maucher, Wolfgang
(86) Internationale Anmeldenummer: PCT/EP2004/010837
(87) Internationale Veröffentlichungsnummer: WO 2005/052421

(56) Entgegenhaltungen:
- DE-A- 3 722 665
- GB-A- 661 479
- GB-A- 1 031 226

## Beschreibung

Die Erfindung betrifft einen Rückflußverhinderer, der im Gehäuse-Innenraum seines Einsetzgehäuses einen Ventilkörper hat, der in seiner Schließstellung an einem Ventilsitz dichtend anliegt und der von seiner Schließstellung gegen eine Rückstellkraft in seine Offenstellung bewegbar ist, wobei der Gehäuse-Innenraum im Bewegungsbereich des Ventilkörpers einen Innenraum-Abschnitt aufweist, der einen gegenüber dem Ventilkörper-Außenumfang erweiterten lichten Querschnitt hat, wobei zur spielfreien Führung des Ventilkörpers eine zwischen dem Ventilkörper und der den Innenraum-Abschnitt umgrenzenden Gehäuse-Innenwand wirksame federelastische Ventilkörper-Führung vorgesehen ist, und wobei die Ventilkörper-Führung zumindest zwei, vorzugsweise mehr als zwei Federarme hat, die, wenigstens mit ihrem freien Endbereich, an der Gehäuse-Innenwand und/oder am Ventilkörper anliegen.

Aus der DE 37 22 665 C2 ist bereits ein Rückflußverhinderer bekannt, der in Gas- oder Wasserleitungen und somit in sanitäre Strömungsleitungen einsetzbar ist. Der vorbekannte Rückflußverhinderer weist einen, in einem Außengehäuse angeordneten Ventilkörper auf, der durch die Rückstellkraft einer auf ihn einwirkenden Rückstellfeder entgegen der Durchströmrichtung gegen einen Ventilsitz verschiebbar ist. Dabei ist der Ventilkörper in einem im Außengehäuse befindlichen separaten Führungskäfig geführt, der in Richtung des Verschiebeweges des Ventilkörpers verlaufende, radial nach innen vorstehende Führungsstege aufweist, die über einen gemeinsamen Grundkörper miteinander verbunden und beidseits im Außengehäuse gehalten sind.

Das zuströmseitige Ende dieser Führungsstege ist mit Abstand unterhalb des Ventilsitzes angeordnet. Zwischen dem vom Ventilkörper in Schließstellung dichtend beaufschlagten Ventilsitz einerseits und dem zuströmseitigen Ende der Führungsstege andererseits ist ein Innenraum-Abschnitt vorgesehen, der einen gegenüber dem Ventilkörper-Außenumfang erweiterten lichten Querschnitt hat. Insbesondere bei geringen Durchflussmengen, die den Ventilkörper nur geringfügig vom Ventilsitz abheben, besteht jedoch das Problem, dass der Ventilkörper im Verlaufe seines Schiebeweges im erweitertem Innenraum-Abschnitt durch das durchströmende Fluid zu Vibrationen angeregt wird, die den Ventilkörper glockenartig am Außengehäuse anschlagen lassen und sich als unangenehme Rasselgeräusche bemerkbar machen. Diese Rasselgeräusche sind über die sanitäre Versorgungsleitung eventuell im gesamten Gebäude hörbar.

Aus der GB 661 479 A ist bereits ein hydraulischer Stoßdämpfer bekannt, der im Inneren seines Dämpfergehäuses ein Zwei-Wege-Ventil hat. Das Zwei-Wege-Ventil des vorbekannten Stoßdämpfers weist ein Ventilgehäuse mit einem inneren Ringflansch auf, der als Ventilsitz für einen Schließkörper dient. Der Schließkörper weist seinerseits einen Durchflusskanal auf, in dem ein in gegensätzlicher Durchflussrichtung wirksames Rückschlagventil vorgesehen ist. Beim Ausfahren des Stoßdämpfers entsteht im Inneren des Dämpfergehäuses ein Unterdruck, der den Schließkörper von seinem Ventilsitz anhebt, bis dessen Hubbewegung durch strahlenförmig zueinander angeordnete, federelastische und fingerartig nach innen vorstehende Anschläge begrenzt wird.

In den Anwendungsbereichen eines hydraulischen Stoßdämpfers sind jedoch diejenigen Geräusche völlig ohne Belang, die sich im Inneren des Stoßdämpfers allein durch die durchströmende Hydraulikflüssigkeit ergeben könnten. Eine in radialer Richtung spielfreie Hubbewegung wird daher nicht angestrebt, - vielmehr sollen bei dem aus GB 661 479 A vorbekannten Stoßdämpfer die fingerartigen Anschläge die durch den Unterdruck bewirkte Hubbewegung des Schließkörpers in axialer Richtung begrenzen.

Es besteht daher insbesondere die Aufgabe, einen Rückflußverhinderer der eingangs erwähnten Art zu schaffen, der sich auch bei geringen durchströmenden Durchflussmengen nicht durch eine störende Geräuschbildung bemerkbar macht.

Die erfindungsgemäße Lösung dieser Aufgabe besteht bei dem Rückflußverhinderer der eingangs erwähnten Art insbesondere darin, dass wenigstens der freie Endbereich der Federarme im wesentlichen parallel zu der Bewegung des Ventilkörpers ist.

Der erfindungsgemäße Rückflußverhinderer weist eine federelastische Ventilkörper-Führung auf, die zwischen dem Ventilkörper und der den Innenraum-Abschnitt umgrenzenden Gehäuse-Innenwand wirksam ist. Diese Ventilkörper-Führung hält den Ventilkörper vorzugsweise zumindest in seinem an den Ventilsitz angenäherten Bewegungsbereich derart spielfrei im Einsetzgehäuse, dass störende Rasselgeräusche durch einen am Einsetzgehäuse vibrierenden Ventilkörper nicht auftreten können.

Eine einfache Ausführungsform gemäß der Erfindung sieht beispielsweise vor, dass die Federarme an das Einsetzgehäuse innenseitig angeformt oder dergleichen am Einsetzgehäuse gehalten sind und vorzugsweise mit ihrem freien Federarm-Endbereich im Bereich des Ventilsitzes angeordnet sind. Bei dieser Ausführungsform nehmen die an das Einsetzgehäuse angeformten oder dergleichen am Einsetzgehäuse gehaltenen Federarme mit ihren federelastischen Federarm-Endbereichen den Ventilkörper bereits im Bereich des Ventilsitzes auf.

Eine andere Ausführungsform gemäß der Erfindung sieht jedoch vor, dass die Federarme an den Ventilkörper angeformt oder dergleichen am Ventilkörper gehalten sind und mit ihrem freien Federarm-Endbereich an der Gehäuse-Innenwand anliegen. So ist es beispielsweise möglich, dass die Federarme an einem Ringstück vorgesehen sind, welches Ringstück am Ventilkörper befestigbar ist. Sind die Federarme am Ventilkörper gehalten, wird dieser bereits vom Ventilsitz aus sicher und vibrationsarm entlang der Gehäuse-Innenwand geführt.

Damit die Federarme der störungsfreien Sicherungsfunktion des Rückflußverhinderers nicht im Wege stehen, ist es zweckmäßig, wenn die Federarme mit ihrem freien Federarm-Endbereich in die dem Ventilsitz abgewandte Richtung weisen.

Die sichere und vibrationsarme Führung des Ventilkörpers im Einsetzgehäuse wird noch begünstigt, wenn die Federarme in Umfangsrichtung des Rückflußverhinderers gleichmäßig voneinander beabstandet sind.

Eine einfache und leichte Schiebebewegung des Ventilkörpers im Einsetzgehäuse wird begünstigt, wenn die Federarme im Bereich ihres freien Federarm-Endbereiches gerundet und/oder abgewinkelt sind.

Eine besonders einfache und vorteilhafte Ausgestaltung des erfindungsgemäßen Rückflußverhinderers sieht vor, dass am Ventilkörper-Umfang eine in Schließstellung zwischen Ventilkörper und Ventilsitz wirksame Ringdichtung vorgesehen ist und dass die Federarme auf der dem Ventilsitz abgewandten Seite dieser Ringdichtung angeordnet sind.

Um den Ventilkörper auch in dem dem Ventilsitz, abgewandten Bereich seines Schiebeweges sicher und vibrationsarm führen zu können, ist es vorteilhaft, wenn der Ventilkörper auf seiner dem Ventilsitz abgewandten Seite einen Führungsstab hat, der in einer Führungsöffnung des Einsetzgehäuses verschieblich geführt ist.

Eine bevorzugte Ausführungsform gemäß der Erfindung sieht vor, dass der Rückflußverhinderer als sanitärer Rückflußverhinderer ausgestattet ist, der vorzugsweise in eine Wasserleitung oder eine sanitäre Wasserauslaufarmatur einsetzbar ist.

Weitere Merkmale der Erfindung ergeben sich aus der folgenden Beschreibung erfindungsgemäßer Ausführungsbeispiele in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- Fig. 1: einen Rückflußverhinderer in einem Längsschnitt, wobei der Rückflußverhinderer in seinem Einsetzgehäuse einen Ventilkörper hat, an dem zur spielfreien Führung im Einsetzgehäuse drei federelastische Federarme angeformt sind, die an der Gehäuse-Innenwand anliegen,
- Fig. 2: den Ventilkörper des in Figur 1 dargestellten Rückflußverhinderers in einer Draufsicht auf seine Zuströmseite und
- Fig. 3: einen mit Figur 1 und 2 funktionell vergleichbaren Rückflußverhinderer, bei dem zur spielfreien Führung des Ventilkörpers an die Gehäuse-Innenwand seines Einsetzgehäuses federelastische Federarme angeformt sind, die sich bereits im Bereich des Ventilsitzes an den Außenumfang des Ventilkörpers federelastisch und spielfrei anlegen.

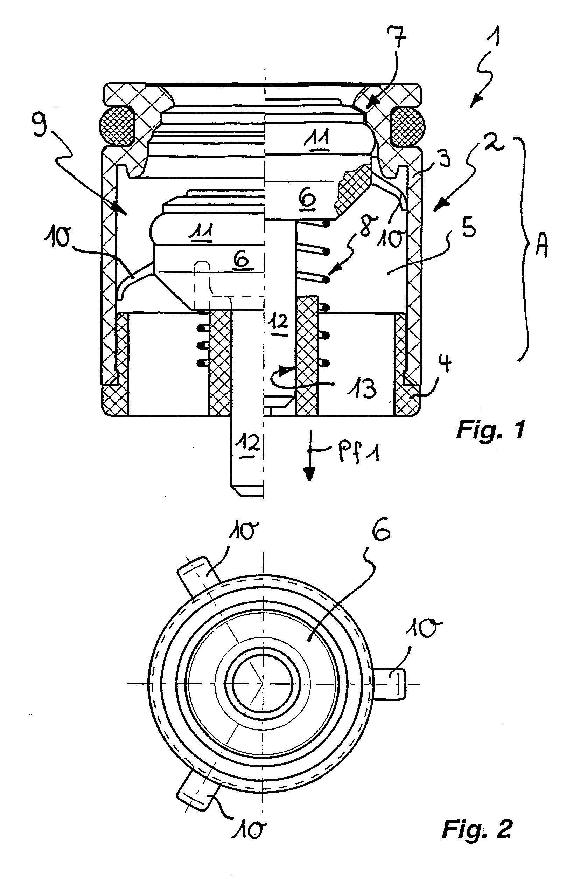

In Figur 1 ist ein Rückflußverhinderer 1 dargestellt, der in eine sanitäre Gas- und vorzugsweise in eine sanitäre Wasserleitung einsetzbar ist. Der Rückflußverhinderer 1 weist ein zweiteiliges Einsetzgehäuse 2 mit einem zuströmseitigen hülsenförmigen Gehäuseteil 3 auf, welches mit einem ringförmigen abströmseitigen Gehäuseteil 4 verrastbar ist.

In dem von den Gehäuseteilen 3, 4 umgrenzten Gehäuse-Innenraum 5 ist ein scheibenförmiger Ventilkörper 6 vorgesehen, der in seiner, in der rechten Hälfte von Figur 1 gezeigten Schließstellung an einem Ventilsitz 7 dichtend anliegt.

Der Ventilkörper 6 ist von seiner Schließstellung aus gegen die Rückstellkraft einer Rückstellfeder 8 in seine, in der linken Hälfte von Figur 1 dargestellten Offenstellung bewegbar. Dabei wird der Ventilkörper 6 von einem in der vorgesehenen Durchflussrichtung Pf1 durchströmenden Fluidstrom in seine Offenstellung bewegt, während eine Rückströmung des Fluidstroms in die entgegengesetzte Richtung den Ventilkörper 6 noch zusätzlich gegen den Ventilsitz 7 presst.

Aus Figur 1 wird deutlich, dass der Gehäuse-Innenraum 5 im Bewegungsbereich des Ventilkörpers 6 einen Innenraum-Abschnitt A aufweist, der einen gegenüber dem Ventilkörper-Außenumfang erweiterten lichten Querschnitt hat. Um den Ventilkörper 6 auch bei geringen Mengen durchströmenden Fluids zumindest in seinem an den Ventilsitz 7 angenäherten Bewegungsbereich spielfrei führen zu können, ist eine zwischen dem Ventilkörper 6 und der den Innenraum-Abschnitt A umgrenzenden Gehäuse-Innenwand wirksame federelastische Ventilkörper-Führung 9 vorgesehen.

Diese Ventilkörper-Führung 9 wird bei dem in Figur 1 dargestellten Rückflußverhinderer 1 durch drei, in Umfangsrichtung des Ventilkörpers 6 etwa gleichmäßig voneinander beabstandete Federarme 10 gebildet.

Wie aus der Draufsicht auf die Zuströmseite des Ventilkörpers 6 in Figur 2 deutlich wird, sind die an den Ventilkörper 6 einstückig angeformten und über den Ventilkörper 6 radial nach außen vorstehenden Federarme 10 in Umfangsrichtung des Ventilkörpers 6 etwa gleichmäßig voneinander beabstandet und liegen spielfrei, aber verschieblich mit ihren freien Federarm-Endbereichen an der Gehäuse-Innenwand des Einsetzgehäuses 2 an.

Um eine störungsfreie Rückstellbewegung des Ventilkörpers 6 von seiner Offenstellung in seine Schließ- oder Ruhestellung nicht zu behindern, weisen die Federarme 10 mit ihren freien, gerundeten oder abgewinkelten und an der Gehäuse-Innenwand federelastisch anliegenden Federarm-Endbereichen in die den Ventilsitz 7 abgewandte Richtung. Am Ventilkörper-Umfang ist eine in Schließstellung zwischen dem Ventilkörper 6 und dem Ventilsitz 7 wirksame Ringdichtung 11 vorgesehen. Dabei sind die Federarme 10 auf der dem Ventilsitz 7 abgewandten Seite dieser Ringdichtung 11 angeordnet.

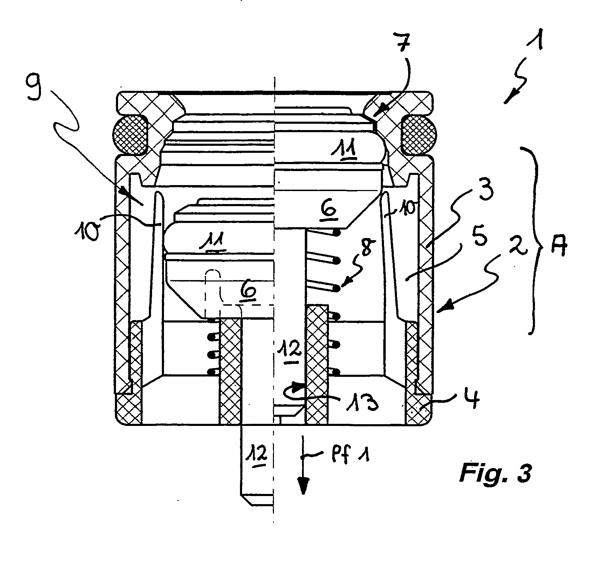

In Figur 3 ist ein Rückflußverhinderer 1 dargestellt, der mit dem Rückflußverhinderer 1 aus den Figuren 1 und 2 funktionell vergleichbar ist. Auch der Rückflußverhinderer 1 aus Figur 3 weist eine federelastische Ventilkörper-Führung 9 auf, die zur spielfreien Führung des ventilkörpers 6 zumindest in seinem an den Ventilsitz 7 angenäherten Bewegungsbereich zwischen dem Ventilkörper 6 und der den Innenraum-Abschnitt A umgrenzenden Gehäuse-Innenwand wirksam ist. Diese Ventilkörper-Führung 9 wird bei dem Rückflußverhinderer 1 aus Figur 3 durch mehrere, an das Ansetzgehäuse 2 innenseitig angeformte Federarme 10 gebildet, die mit ihrem freien Federarm-Endbereich im Bereich des Ventilsitzes 7 angeordnet sind. Bei der in Figur 3 dargestellten Ausführungsform nehmen die an das Einsetzgehäuse 2 angeformten Federarme 10 mit ihren federelastischen Federarm-Endbereichen den Ventilkörper 6 bereits im Bereich des Ventilsitzes 7 auf.

Aus den Figuren 1 und 3 wird deutlich, dass auf der dem Ventilsitz 7 abgewandten Seite der Ventilkörper 6 jeweils ein Führungsstab 12 vorgesehen ist, der in einer Führungsöffnung 13 des Einsetzgehäuses 2 verschieblich geführt ist. Dieser Führungsstab 12 stellt sicher, dass der Rückflußverhinderer 1 auch in seinem dem Ventilsitz 7 abgewandten Bewegungsbereich sicher im Gehäuse-Innenraum 5 geführt ist.

## Patentansprüche

1. Rückflußverhinderer (1), der im Gehäuse-Innenraum (5) seines Einsetzgehäuses (2) einen Ventilkörper (6) hat, der in seiner Schließstellung an einem Ventilsitz (7) dichtend anliegt und der von seiner Schließstellung gegen eine Rückstellkraft in seine Offenstellung bewegbar ist, wobei der Gehäuse-Innenraum (5) im Bewegungsbereich des Ventilkörpers (6) einen Innenraum-Abschnitt (A) aufweist, der einen gegenüber dem Ventilkörper-Außenumfang erweiterten lichten Querschnitt hat, wobei zur spielfreien Führung des Ventilkörpers (6) eine zwischen dem Ventilkörper (6) und der den Innenraum-Abschnitt (A) umgrenzenden Gehäuse-Innenwand wirksame federelastische Ventilkörper-Führung (9) vorgesehen ist, wobei die Ventilkörper-Führung (9) zumindest zwei, vorzugsweise mehr als zwei Federarme (10) hat, die, wenigstens mit ihrem freien Endbereich, an der Gehäuse-Innenwand und/oder am Ventilkörper (6) anliegen, **dadurch gekennzeichnet, dass** wenigstens der freie Endbereich der Federarme im wesentlichen parallel zu der Bewegung des Ventilkörpers (6) ist.

2. Rückflußverhinderer nach Anspruch 1, **dadurch gekennzeichnet, dass** die Ventilkörper-Führung (9) zumindest in dem an den Ventilsitz angenäherten Bewegungsbereich des Ventilkörpers (6) wirksam ist.

3. Rückflußverhinderer nach Anspruch 1 oder 2, **dadurch gekennzeichnet, dass** die dass die Federarme (10) an das Einsetzgehäuse (2) innenseitig angeformt sind und vorzugsweise mit ihrem freien Federarm-Endbereich im Bereich des Ventilsitzes (7) angeordnet sind.

4. Rückflußverhinderer nach einem der Ansprüche 1 bis 3, **dadurch gekennzeichnet, dass** die Federarme (10) an den Ventilkörper (6) angeformt oder dergleichen am Ventilkörper (6) gehalten sind und mit ihrem freien Federarm-Endbereich an der Gehäuse-Innenwand anliegen.

5. Rückflußverhinderer nach Anspruch 4, **dadurch gekennzeichnet, dass** die Federarme (10) mit ihrem freien Federarm-Endbereich in die dem Ventilsitz (7) abgewandte Richtung weisen.

6. Rückflußverhinderer nach einem der Ansprüche 1 bis 5, **dadurch gekennzeichnet, dass** die Federarme (10) in Umfangsrichtung des Rückflußverhinderers (1) gleichmäßig voneinander beabstandet sind.

7. Rückflußverhinderer nach einem der Ansprüche 1 bis 6, **dadurch gekennzeichnet, dass** am Ventilkörper-Umfang eine in Schließstellung zwischen Ventilkörper (6) und dem Ventilsitz (7) wirksame Ringdichtung (11) vorgesehen ist und dass die Federarme (10) auf der dem Ventilsitz (7) abgewandten Seite dieser Ringdichtung (11) angeordnet sind.

8. Rückflußverhinderer nach einem der Ansprüche 1 bis 7, **dadurch gekennzeichnet, dass** der Ventilkörper (6) auf seiner dem Ventilsitz (7) abgewandten Seite einen Führungsstab (12) hat, der in einer Führungsöffnung (13) des Einsetzgehäuses (2) verschieblich geführt ist.

9. Rückflußverhinderer nach einem der Ansprüche 1 bis 8, **dadurch gekennzeichnet, dass** der Rückflußverhinderer (1) als sanitärer Rückflußverhinderer ausgestaltet ist, der vorzugsweise in eine Wasserleitung oder in eine sanitäre Wasserauslaufarmatur einsetzbar ist.

## Claims

1. Backflow preventer (1) which has a valve member (6) in the interior (5) of its mounting housing (2), said valve member (6) in its closed position lying against a valve seating (7) so as to form a seal and being movable from its closed position into its open position counter to a restoring force, wherein the housing interior (5) has, in the region of movement of the valve member (6), an interior portion (A) which has an internal cross section that has been widened in relation to the outer periphery of the valve member, while for guiding the valve body (6) without play a resiliently elastic valve member guide (9) is provided which is effective between the valve member (6) and the inner wall of the housing surrounding the interior portion (A), the valve member guide (9) having at least two, preferably more than two spring arms (10) which abut, at least with their free end region, on the inner wall of the housing and/or on the valve member (6), **characterised in that** at least the free end region of the spring arms is substantially parallel to the movement of the valve member (6).

2. Backflow preventer according to claim 1, **characterised in that** the valve member guide (9) is effective at least in the area of movement of the valve member (6) which is close to the valve seat.

3. Backflow preventer according to claim 1 or 2, **characterised in that** the spring arms (10) are formed on the inside of the mounting housing (2) and are preferably arranged with their free spring arm end region in the vicinity of the valve seat (7).

4. Backflow preventer according to one of claims 1 to 3, **characterised in that** the spring arms (10) are formed on the valve member (6) or similarly secured to the valve member (6) and abut with their free spring arm end region on the inner wall of the housing.

5. Backflow preventer according to claim 4, **characterised in that** the spring arms (10) point with their free spring arm end region in the direction facing away from the valve seat (7).

6. Backflow preventer according to one of claims 1 to 5, **characterised in that** the spring arms (10) are uniformly spaced from one another in the circumferential direction of the backflow preventer (1).

7. Backflow preventer according to one of claims 1 to 6, **characterised in that** an annular seal (11) which is effective between the valve member (6) and the valve seat (7) in the closed position is provided on the circumference of the valve member and **in that** the spring arms (10) are arranged on the side of this annular seal (11) remote from the valve seat (7).

8. Backflow preventer according to one of claims 1 to 7, **characterised in that** the valve member (6) has, on its side remote from the valve seat (7), a guide rod (12) which is guided to be movable within a guide opening (13) in the mounting housing (2).

9. Backflow preventer according to one of claims 1 to 8, **characterised in that** the backflow preventer (1) is designed as a sanitary backflow preventer which may preferably be installed in a water pipe or in a sanitary water outlet fitting.

## Revendications

1. Dispositif antireflux (1) qui a dans l'espace intérieur de boîtier (5) de son boîtier d'insertion (6) un corps de soupape (6) qui, dans sa position fermée, est en contact étanchant avec un siège de soupape (7) et peut, de sa position fermée, être déplacé dans sa position ouverte contre une force de rappel, l'espace intérieur de boîtier (5) présentant dans la zone de mouvement du corps de soupape (6) une section d'espace intérieur (A) qui a une section transversale intérieure élargie par rapport à la circonférence extérieure du corps de soupape, un guidage de corps de soupape à déformation (9) efficace entre le corps de soupape (6) et la paroi intérieure de boîtier qui entoure la section d'espace intérieur (A) étant prévu en vue du guidage sans jeu du corps de soupape (6), le guidage de corps de soupape (9) ayant au moins deux, de préférence plus de deux bras à ressort (10) qui sont en contact avec la paroi intérieure du boîtier et/ou le corps de soupape (6) au moins avec leur zone d'extrémité libre, **caractérisé en ce qu'**au moins la zone d'extrémité libre des bras à ressort est pour l'essentiel parallèle au mouvement du corps de soupape (6).

2. Dispositif antireflux selon la revendication 1, **caractérisé en ce que** le guidage de corps de soupape (9) est efficace au moins dans la zone de mouvement du corps de soupape (6) rapprochée du siège de soupape.

3. Dispositif antireflux selon la revendication 1 ou 2, **caractérisé en ce que** les bras à ressort (10) sont formés sur la face intérieure du boîtier d'insertion (2) et de préférence disposés avec leur zone d'extrémité libre dans la zone du siège de soupape (7).

4. Dispositif antireflux selon l'une quelconque des revendications 1 à 3, **caractérisé en ce que** les bras à ressort (10) sont formés sur le corps de soupape (6) ou maintenus de manière semblable sur le corps de soupape (6) et sont en contact avec leur zone d'extrémité libre avec la paroi intérieure de boîtier.

5. Dispositif antireflux selon la revendication 4, **caractérisé en ce que** les bras à ressort (10) sont orientés avec leur zone d'extrémité libre de bras à ressort dans la direction opposée à celle du siège de soupape (7).

6. Dispositif antireflux selon l'une quelconque des revendications 1 à 5, **caractérisé en ce que** les bras à ressort (10) sont écartés de manière homogène les uns des autres dans le sens de la circonférence du dispositif antireflux (1).

7. Dispositif antireflux selon l'une quelconque des revendications 1 à 6, **caractérisé en ce qu'**un joint annulaire (11) efficace entre le corps de soupape (6) et le siège de soupape (7) dans la position fermée est prévu sur la circonférence du corps de soupape et **en ce que** les bras à ressort (10) sont disposés sur le côté de ce joint annulaire (11) opposé au siège de soupape (7).

8. Dispositif antireflux selon l'une quelconque des revendications 1 à 7, **caractérisé en ce que** le corps de soupape (6) a sur son côté opposé au siège de soupape (7) une tige de guidage (12) qui est guidée de manière mobile dans un orifice de guidage (13) du boîtier d'insertion (2).

9. Dispositif antireflux selon l'une quelconque des revendications 1 à 8, **caractérisé en ce que** le dispositif antireflux (1) est conçu comme un dispositif antireflux sanitaire, qui peut de préférence être inséré dans une conduite d'eau ou dans un robinet sanitaire d'écoulement d'eau.
